# EUROPÄISCHE PATENTANMELDUNG

(11) **EP 1 594 326 A1**
(43) Veröffentlichungstag der Anmeldung: **09.11.2005**
(21) Anmeldenummer: 04010940.7
(22) Anmeldetag: 07.05.2004
(51) Int. Cl.: H04Q 7/24

(54) **Verbindungsaufbau in einem Sprach- und Videotelephonie unterstützenden Mobilfunknetz**

(71) Anmelder: SIEMENS AKTIENGESELLSCHAFT, 80333 München (DE)
(72) Erfinder: Belling, Thomas, Dr., 81477 München (DE)

(57) **Zusammenfassung**

Ein optimierter Verbindungsaufbau wird ermöglicht durch ein Verfahren zum Signalisierung während eines Verbindungsaufbaus zwischen zwei Teilnehmern (UE-A,UE-B) mindestens eines Mobilfunknetzes (RNC-A,MSC-A,MSC-B,RNC-B), wobei neben der standardisierten ISUP "UDI Fallback Signalisierung" eine geeignete Signalisierungserweiterung verwendet wird, die auch einen späteren Wechsel zwischen Sprache und Video während der bestehenden Verbindung ermöglicht, wobei der anrufende Teilnehmer (UE-A) signalisiert, ob er eine Videotelephonie oder eine Sprachtelephonie unterstützt und ob er eine Videotelephonie oder eine Sprachtelephonie bevorzugt, wobei eine Vermittlungseinrichtung (MSC-B) den angerufenen Teilnehmer (UE-B) nach einer Rückmeldung dahingehend fragt, ob er eine Videotelephonie unterstützt, ob er eine Sprachtelephonie unterstützt und ob er eine Videotelephonie oder eine Sprachtelephonie bevorzugt,
wobei die Vermittlungseinrichtung (MSC-B) unter Berücksichtigung der Rückmeldung des angerufenen Teilnehmers (UE-B) eintscheidet, ob eine Videotelephonie oder eine Sprachtelephonie aufgebaut wird.

## Beschreibung

Die Erfindung betrifft Verfahren und Vorrichtungen zur Signalisierung zwischen zwei Teilnehmern mindestens eines Mobilfunknetzes während eines Verbindungsaufbaus.

Mobilfunknetze sind beispielsweise aus www.etsi. de oder www.3gpp.org bekannt. Aus der Spezifikation TS 23.172 ist der "Service Change and UDI Fallback service" (SCUDIF) für 3GPP Mobilfunknetze bekannt. SCUDIF ermöglicht beim Aufbau von Gesprächsverbindungen zu verhandeln, ob eine Videotelephonie oder eine Sprachtelephonie-Verbindung aufgebaut wird. Falls beispielsweise der Anrufer Videotelephonie nicht unterstützt, wird Sprachtelephonie aufgebaut. Zusätzlich ermöglicht es SCUDIF den Benutzern eines Mobilfunknetzes, während einer bestehenden Nutzverbindung zwischen Sprachtelephonie und Videotelephonie zu wechseln. Außerdem kann das Mobilfunknetz den Wechsel von Videotelephonie zu Sprachtelephonie veranlassen, wenn das auf Grund sich verschlechternder Übertragungsbedingungen oder Ressourcenknappheit an der Luftschnittstelle vorteilhaft ist.

SCUDIF benutzt im so genannten "Core"-Netz eines 3GPP Mobilfunknetzes die BICC Codec-Verhandlung (gemäß 3GPP TS 23.153 und ITU-T Q.1902.5), und setzt daher voraus, dass BICC, und nicht ISUP, im "Core"-Netz des 3GPP Mobilfunknetzes als Signalisierungsprotokoll verwendet wird. Auch in so genannten Transitnetzen, die 3GPP Mobilfunknetze in so genannten "Roaming" Szenarien verbinden können, und die auch zur Verbindung der 3GPP Heimatnetze des Anrufers und des Angerufenen genützt werden können, muss die BICC Codec Verhandlung unterstützt werden. Da BICC nicht in vielen Mobilfunknetzen und Transitnetzen verwendet wird, kann SCUDIF häufig nicht durchgehend unterstützt werden.

Aufgabe der vorliegenden Erfindung ist es, den Verbindungsaufbau eines Sprachtelephonie und Videotelephonie unterstützenden Mobilfunknetzes und/ oder Mobilfunkendgerätes zu optimieren. Die Aufgabe wird jeweils durch die Gegenstände der unabhängigen Patentansprüche gelöst. Vorteilhafte Ausgestaltungen finden sich in den Unteransprüchen.

Zwischen Vermittlungsknoten eines Mobilfunknetzes kann eine ISUP UDI Fallback Signalisierung eingesetzt werden. Wenn ein mobiles Endgerät eines Anrufers beim Verbindungsaufbau dem Vermittlungsknoten auf Seiten des Anrufers mittels einer schon für SCUDIF standardisierten Signalisierung anzeigt, dass falls möglich der Aufbau eines Sprachtelephonieverbindung und andernfalls der Aufbau einer Videotelephonieverbindung gewünscht ist, baut der Vermittlungsknoten nur eine Sprachtelephonieverbindung auf und verwendet die schon für SCUDIF standardisierten Signalisierung, um dem mobilen Endgerät das anzuzeigen. Wenn dagegen das mobile Endgerät des Anrufers beim Verbindungsaufbau dem Vermittlungsknoten auf Seiten des Anrufers mittels einer schon für SCUDIF standardisierten Signalisierung anzeigt, dass falls möglich der Aufbau einer Videotelephonieverbindung und andernfalls der Aufbau einer Sprachtelephonieverbindung gewünscht ist, verwendet dieser Vermittelungsknoten in der so genannten IAM Nachricht beim Verbindungsaufbau den ISUP Parameters TMR Prime mit Wert "64 kbit unrestricted preferred" und geeigneten Werten im ISUP Parameters USI für eine Videotelephonie, sowie den ISUP Parameters TMR mit geeigneten Werten für Sprachtelephonie, z. B. "3.1 kHz Audio" oder "speech". Der Vermittelungsknoten auf Seiten des Angerufenen benutzt beim Erhalt dieser Nachricht die schon für SCUDIF standardisierte Signalisierung zum mobilen Endgerät des Anrufers hin, um zu ermitteln, ob eine Videotelephonie vom mobilen Endgerät unterstützt und vom angerufenen Teilnehmer gewünscht wird, und wählt entsprechend Sprachtelephonie oder Videotelephonie aus. Falls Videotelephonie ausgewählt wird, signalisiert das der mobile Vermittlungsknoten, indem er gemäß den ISUP UDI Fallback Prozeduren den Parameter TMU nicht in den so genannten ANM und ACM Nachrichten einfügt. Es wird dadurch ein transparenter Verbindungstransport durch das mobile Vermittlungsnetz mit 64kbits Bandbreite gemäß TMR Prime mit Wert "64 kbit unrestricted preferred" konfiguriert. Falls Sprachtelephonie ausgewählt wird, signalisiert das der mobile Vermittlungsknoten, indem er gemäß den ISUP UDI Fallback Prozeduren den Parameter TMU in der ANM und ACM Nachrichten einfügt, und den selben Wert wie im TMR Parameter der IAM Nachricht wählt. Der Vermittlungsknoten auf Seiten des Anrufers zeigt mittels der schon für SCUDIF standardisierten Signalisierung dem mobilen Endgerät des Anrufers an, ob Sprachtelephonie oder Videotelephonie ausgewählt wurde.

Weiterhin kann eine geeignete Signalisierungserweiterung in ISUP-Netzen eingeführt werden, um beim Verbindungsaufbau wie auch während einer bestehenden Verbindung eine Verhandlung darüber zu ermöglichen, ob Sprachtelephonie oder Videotelephonie verwendet werden soll. Die Signalisierungs-Erweiterung kann in der Einführung neuer Parameter und Nachrichten direkt in ISUP bestehen, oder aber in der Verwendung des sogenannten Applikation Transport Mechanismus, ITU-T Q.765, zum Transport einer neuen, geeigneten Applikation. Zwischen den mobilen Endgeräten und den Vermittelungsknoten wird die für SCUDIF schon standardisierte Signalisierung unverändert genützt. Die ISUP Signalisierungserweiterung erlaubt es auszudrücken, ob das mobile Endgerät Sprachtelephonie und Videotelephonie unterstützt, und welcher Service gegenwärtig vorzugsweise gewünscht wird. Dazu könnte etwa ein Parameter mit vier Werten eingeführt werden, die ausdrücken:
+ Nur Sprachtelephonie unterstützt
+ Nur Videotelephonie unterstützt
+ Sprachtelephonie und Videotelephonie unterstützt, und Sprachtelephonie gewünscht.
+ Sprachtelephonie und Videotelephonie unterstützt, und Videotelephonie gewünscht.

Es ist auch denkbar, eine Codec- Verhandlung so wie für BICC standardisiert auch für ISUP einzuführen.
Beim Verbindungsaufbau werden geeignete Parameter der Signalisierungserweiterung vom Vermittlungsknoten auf Seiten des Anrufers in die so genannte IAM Nachricht eingefügt, um die Wünsche und Fähigkeiten des Anrufers auszudrücken. Der Vermittlungsknoten auf der Seite des Angerufenen benutzt diese Informationen und die Wünsche und Fähigkeiten des Angerufenen, um zu entscheiden, ob Sprachtelephonie oder Videotelephonie genützt werden soll. Er fügt geeignete Parameter der Signalisierungserweiterung in die ACM oder ANM Nachricht ein, um auszudrücken, welche Fähigkeiten das mobile Endgerät des Angerufenen besitzt, und ob Sprachtelephonie oder Videotelephonie ausgewählt wurde.
Während einer bestehenden Verbindung können dieselben geeigneten Parameter der Signalisierungserweiterung in einer geeigneten ISUP Nachricht verwendet werden, um anzuzeigen, dass ein Teilnehmer einen Wechsel zwischen Sprachtelephonie und Videotelephonie wünscht. Der diese Nachricht empfangende Vermittlungsknoten kann dem Wechsel zustimmen, oder ihn ablehnen, und teilt seine Entscheidung wiederum mittels geeigneter Parameter der Signalisierungserweiterung in einer geeigneten ISUP Nachricht dem Vermittlungsknoten mit, der den Wechsel veranlassen wollte. Geeignete Nachrichten sind wahlweise APM Nachrichten, oder aber neu zu standardisierende ISUP Nachrichten.

Erfindungsgemäß ist es besonders vorteilhaft, diese Signalisierungserweiterung mit einer transparenten Nutzverbindung zu nützen, z. B. "UDI" oder "64 kbit unrestricted preferred". Damit wird vermieden, dass bei einem Wechsel zwischen Video und Sprache Transitknoten umkonfiguriert werden. Damit wird es ermöglicht, dass auch die Signalisierungserweiterung selbst von Transitknoten nicht verstanden werden muss, sondern transparent weitergereicht werden kann.

Erfindungsgemäß kann beim Verbindungsaufbau die ISUP Erweiterung zusammen mit dem ISUP UDI Fallback wie folgt verwendet werden:
In einer Phase, in der noch nicht das ganze Mobilfunknetz die ISUP Erweiterung unterstützt, wird vorausgesetzt, dass der Anrufer beim Verbindungsaufbau zunächst Videotelephonie bevorzugt. Allerdings wird nun durch die Signalisierungserweiterung ein späterer Wechsel zu Sprache hin unterstützt, der beispielsweise vom Netz wegen Problemen an der Luftschnittstelle ausgelöst werden kann.

Wenn das mobile Endgerät des Anrufers beim Verbindungsaufbau dem Vermittlungsknoten auf Seiten des Anrufers mittels einer schon für SCUDIF standardisierten Signalisierung anzeigt, dass falls möglich der Aufbau eines Sprachtelephonieverbindung und andernfalls der Aufbau einer Videotelephonieverbindung gewünscht ist, baut der Vermittlungsknoten nur eine Sprachtelephonieverbindung auf und verwendet die schon für SCUDIF standardisierte Signalisierung um dem mobilen Endgerät das anzuzeigen. Wenn dagegen das mobile Endgerät des Anrufers beim Verbindungsaufbau dem Vermittlungsknoten auf Seiten des Anrufers mittels einer schon für SCUDIF standardisierten Signalisierung anzeigt, dass falls möglich der Aufbau einer Videotelephonieverbindung und andernfalls der Aufbau eigener Sprachtelephonieverbindung gewünscht ist, verwendet der Vermittlungsknoten des Anrufers in der IAM Nachricht die Signalisierungs-Erweiterung zusammen mit den ISUP UDI Fallback Parametern. Der so genannte Vorwärts-Kompatibilitäts-Mechanismus von ISUP wird genützt um anzuzeigen, dass die Parameter der Signalisierungserweiterung von Transitvermittelungsknoten, die sie nicht verstehen, transparent weitergereicht werden sollen, und vom Vermittelungsknoten des Angerufenen ignoriert werden sollen, wenn dieser sie nicht versteht.

Wenn der Vermittlungsknoten des Angerufenen die Signalisierungserweiterung unterstützt, benutzt er beim Erhalt der IAM Nachricht die darin enthaltene Information, um abzuleiten, ob zunächst Videotelephonie oder Sprachtelephonie gewünscht ist, und ob ein späterer Wechsel möglich ist. Zusätzlich überprüft der Vermittlungsknoten die ISUP Parameter TMR und TMR Prime, um zu ermitteln, ob eine transparente Nutzverbindung, z. B. "UDI" oder "64 kbit unrestricted preferred", oder eine Sprachverbindung, z.B. "speech" oder "3.1 kHz Audio", gefordert ist. Wenn eine Sprachverbindung gefordert ist, muss der Verbindungsknoten Sprachtelephonie wählen und Videotelephonie ist für diese Verbindung nicht unterstützt. Zu diesem Szenario kann es kommen, wenn ein Transitknoten den UDI Fallback ausgelöst hat. Wenn der Vermittlungsknoten des Angerufenen die Signalisierungserweiterung nicht unterstützt nimmt und ISUP UDI Fallback Signalisierung empfängt, wird angenommen dass zunächst Videotelephonie gewünscht wird. Der Vermittelungsknoten auf Seiten des Angerufenen benutzt nach Erhalt der IAM Nachricht die schon für SCUDIF standardisierte Signalisierung zum mobilen Endgerät des Anrufers hin, um zu ermitteln, ob eine Videotelephonie vom mobilen Endgerät unterstützt und vom angerufenen Teilnehmer gewünscht wird, und wählt entsprechend Sprachtelephonie oder Videotelephonie aus. Wenn der Vermittlungsknoten des Angerufenen die Signalisierungserweiterung unterstützt, nutzt er die ISUP UDI "fallback" (=Ausweichmöglichkeit) Prozeduren (wobei z.B. Parameter TMU in den so genannten ANM und ACM Nachrichten weggelassen sein kann) um entweder einen transparenten Verbindungstransport durch das mobile Vermittlungsnetz mit 64kbits Bandbreite, oder einen Sprachtransport auszuwählen, wobei er wie folgt entscheidet: Wenn das mobile Endgerät des Angerufenen einen Wechsel zwischen Sprache und Video während der existierenden Verbindung unterstützt, und zunächst Video auswählt, wählt der Vermittlungsknoten einen transparenten Verbindungstransport. Wenn das mobile Endgerät des Angerufenen nur Sprachtelephonie unterstützt, wählt der Vermittlungsknoten einen Sprachtransport. Dies ist besonders vorteilhaft, da ein Sprachtransport häufig billiger als eine transparente 64 kbit Verbindung ist. Wenn das mobile Endgerät des Angerufenen einen Wechsel zwischen Sprache und Video während der existierenden Verbindung unterstützt, und zunächst Sprache auswählt, hängt es von den Präferenzen des Betreibers ab, ob eine transparente 64 kbit Verbindung, die einen späteren Wechsel ermöglicht, oder eine billigere Sprachverbindung ausgewählt wird. Wenn der Vermittlungsknoten des Angerufenen die Signalisierungserweiterung unterstützt und eine transparente 64 kbit Verbindung auswählt, fügt er die Signalisierungs-Erweiterung in die ACM und möglicherweise die ANM Nachricht zurück zum Anrufer ein. Wenn der Vermittlungsknoten des Angerufenen die Signalisierungserweiterung unterstützt und eine Sprachverbindung auswählt, kann er die Signalisierungs-Erweiterung in der ACM und ANM Nachricht weglassen, oder sie einfügen und darin ausdrücken, dass nur Sprachtelephonie möglich ist.

Wenn der Vermittlungsknoten des Anrufers eine ACM Nachricht ohne die Signalisierungs-Erweiterung empfängt, wählt er zwischen Videotelephonie und Sprachtelephonie, wie für die UDI Fallback Prozeduren beschrieben. Wenn der Vermittlungsknoten des Anrufers eine ACM Nachricht mit der Signalisierungs-Erweiterung empfängt, nützt er die darin empfangene Information, um zwischen Videotelephonie und Sprachtelephonie zu wählen.

In einer Phase, in der das gesamte Mobilfunknetz oder fast das gesamte Mobilfunknetz (=bis auf reine Transitknoten etc) die ISUP Signalisierungs-Erweiterung unterstützt, kann der UDI Fallback Mechanismus auch eingesetzt werden, wenn der Anrufer beim Verbindungsaufbau zunächst Videotelephonie bevorzugt. Um Fehler zu vermeiden, kann der Vermittlungsknoten des Anrufers mittels eines so genannten Vorwärts-Kompatibilitäts-Mechanismus von ISUP nun anzuzeigen, dass der Vermittelungsknoten des Angerufenen die Verbindung beenden soll, wenn er die Signalisierungs-Erweiterung nicht versteht. Nun kann für Gespräche innerhalb eines Netzes die ISUP Signalisierungs-Erweiterung auch ohne den ISUP UDI Fallback Mechanismus verwendet werden. In diesem Fall muss allerdings ein Übergangsknoten zu einem anderen Netz, das die Signalisierungs-Erweiterung nicht unterstützt, entweder beim Verbindungsaufbau Sprachtelephonie auswählen und zusätzlich die Nutzverbindung von einer transparenten 64 kbit Verbindung in eine Sprachverbindung umwandeln, oder aber versuchen, eine reine Videotelephonie aufzubauen, wobei der Aufbau der Verbindung scheitert, wenn das Endgerät des Anrufers Videotelephonie nicht unterstützt.

Ein Übergangsknoten zu einem anderen Netz, das die Signalisierungs-Erweiterung nicht in allen Vermittlungsknoten unterstützt, kann beim Verbindungsaufbau die IAM Nachricht weiterreichen, wenn zunächst Videotelephonie ausgewählt ist. Ist dagegen zunächst Sprachtelephonie ausgewählt, veranlasst der Übergangsknoten den Aufbau einer Sprachverbindung, indem er gemäß ISUP UDI Fallback Prozeduren in der IAM Nachricht zum nächsten Knoten eine Sprachverbindung fordert (z.B. TMR "speech"), und in der ACM Nachricht in Gegenrichtung den TMU Parameter mit geeignetem Wert einfügt, z.B. "speech". Damit wählt er einen Sprachtransport. Dies ist besonders vorteilhaft, da ein Sprachtransport häufig billiger als eine transparente 64 kbit Verbindung ist.

Erfindungsgemäß kann zusätzlich die schon für SCUDIF standardisierte Signalisierung zwischen einem mobilen Endgerät und einem Vermittlungsknoten dadurch leicht angepasst werden, dass für den so genannten Repeat Indicator ein neuer Wert eingeführt wird, der ausdrückt, dass nur ein Zurückfallen auf Sprachtelephonie beim Verbindungsaufbau, aber kein Wechsel während des "Calls" (=der Verbindung) erlaubt ist. Diesen Wert verwendet der Vermittlungsknoten auf Seiten des Anrufers, wenn er die ISUP Signalisierungserweiterung für den Servicewechsel nicht unterstützt, oder aber wenn er in der ACM Nachricht keine Parameter der ISUP- Signalisierungs-Erweiterung empfängt, aber auch keinen TMU Parameter empfängt, so dass zunächst eine Videotelephonie (=z.B. eine zusätzlich zur Sprachübertragung eine Bildübertragung umfassende Verbindung) ausgewählt wurde. Diesen Wert verwendet der Vermittlungsknoten auf Seiten des Angerufenen, wenn er die ISUP Signalisierungserweiterung für den Servicewechsel nicht unterstützt, oder aber wenn er in der IAM Nachricht keine Parameter der ISUP- Signalisierungs-Erweiterung empfängt. Die mobilen Endgeräte können die Information, ob ein Wechsel während der bestehenden Verbindung möglich ist, beim Anwender anzeigen und nur dann Bedienelemente zum Wechsel anbieten, wenn er möglich ist.

Ein besonderer Vorteil der Erfindung ist es, dass dadurch eine schrittweise Einführung der SCUDIF Funktionalität in ISUP Netzen möglich ist, die sich an der voraussichtlichen Verfügbarkeit der erforderlichen Signalisierung orientiert. In einer ersten Phase kommt ein Mobilfunknetz mit bestehender ISUP Signalisierung aus. Es wird ermöglicht, dass darauf folgend eine ISUP Signalisierungserweiterung schrittweise im Netz eingeführt wird.

In einer Phase, wo bereits das ganze Mobilfunknetz bis auf Transitknoten die ISUP Signalisierungserweiterung unterstützt, ist die Verbindung von ISUP Signalisierungserweiterung mit UDI Fallback besonders beim Übergang zu anderen Netzen vorteilhaft, die die Signalisierungserweiterung noch nicht vollständig unterstützen.

Zusätzlich bietet die Verbindung von ISUP Signalisierungserweiterung mit UDI Fallback den Vorteil, dass potentiell teurere transparente 64 kbit Nutzverbindungen vermieden werden, wenn das Endgerät des Angerufenen keine Videotelephonie unterstützt. In diesem wahrscheinlich häufigen Fall entstehen also durch die Benutzung der SCUDIF Funktionalität durch den Anrufer dem Netzbetreiber keine Mehrkosten.

Die Verwendung einer transparenten Nutzverbindung, z. B. "UDI" oder "64 kbit unrestricted preferred", zusammen mit einem so genannten Vorwärts-Kompatibilitäts-Mechanismus von ISUP erlaubt es, Transitknoten nicht für die Signalisierungserweiterung anpassen zu müssen.

Auch gewinnt der Anwender durch die Erfindung den Vorteil zu erfahren, ob ein Wechsel während der bestehenden Verbindung möglich ist.

Erfindungsgemäß kann eine geeignete ISUP Signalisierungserweiterung in Kombination mit der ISUP UDI Fallback Prozedur verwendet werden, wobei die Interaktionen zwischen dieser Signalisierungs-Erweiterung und der UDI Fallback Prozedur am Vermittlungsknoten des Anrufers und des Angerufenen wie beschrieben erfolgen.

Zusätzlich kann die schon für SCUDIF standardisierte Signalisierung zwischen einem mobilen Endgerät und einem Vermittlungsknoten dadurch leicht angepasst werden, dass für den so genannten Repeat Indicator ein neuer Wert eingeführt wird, der ausdrückt, dass nur ein Zurückfallen (fallback) von einer Videotelephonie auf eine Sprachtelephonie beim Verbindungsaufbau, aber kein Wechsel zu einer Sprachtelephonie während einer bestehenden Verbindung erlaubt ist.

Die Verwendung einer transparenten Nutzverbindung, z. B. "UDI" oder "64 kbit unrestricted preferred", erlaubt es, Transitknoten nicht anpassen zu müssen.

Weitere Merkmale und Vorteile der Erfindung ergeben sich aus der nachfolgenden Beschreibung eines Ausführungsbeispiels anhand der Zeichnung. Dabei zeigt:
- Figur 1: den Informationsfluss für einen ersten erfindungsgemäßen Schritt mit einer ISUP-UDI-Fallback-Lösung und ohne ISUP-Erweiterungen, wobei das Endgerät UE B des Angerufenen nur Sprachtelephonie unterstützt
- Figur 2: den Informationsfluss für einen ersten erfindungsgemäßen Schritt mit einer ISUP-UDI-Fallback-Lösung und ohne ISUP-Erweiterungen, wobei das Endgerät UE B des Angerufenen Videotelephonie unterstützt, aber der Angerufene Sprachtelephonie auswählt
- Figur 3: den Informationsfluss für einen ersten erfindungsgemäßen Schritt mit einer ISUP-UDI-Fallback-Lösung und ohne ISUP-Erweiterungen, wobei das Endgerät UE B des Angerufenen Videotelephonie unterstützt, und der Angerufene Videotelephonie auswählt
- Figur 4: den Informationsfluss für den zweiten erfindungsgemäßen Schritt allein mit ISUP-Erweiterungen und ohne eine ISUP-UDI-Fallback-Lösung und mit, wobei das Endgerät UE B des Angerufenen nur Sprachtelephonie unterstützt ,
- Figur 5: den Informationsfluss für den zweiten erfindungsgemäßen Schritt mit einer ISUP-UDI-Fallback-Lösung und mit ISUP-Erweiterungen, wobei das Endgerät UE B des Angerufenen nur Sprachtelephonie unterstützt,
- Figur 6: den Informationsfluss für den zweiten erfindungsgemäßen Schritt mit einer ISUP-UDI-Fallback-Lösung und mit ISUP-Erweiterungen, wobei das Endgerät UE B des Angerufenen Videotelephonie unterstützt, aber der Angerufene Sprachtelephonie wählt. Variante 1: Es ist die Netzbetreiberpolitik ist, einen späteren Service-Wechsel nicht zu erlauben, aber eine Sprechverbindung im Mobilfunknetz-Kernnetz (Corenet) zu nützen,
- Figur 7: den Informationsfluss für den zweiten erfindungsgemäßen Schritt mit einer ISUP-UDI-Fallback-Lösung und mit ISUP-Erweiterungen, wobei das Endgerät UE B des Angerufenen Videotelephonie unterstützt, aber der Angerufene Sprachtelephonie wählt. Variante 2: Es ist die Netzbetreiberpolitik ist, einen späteren Service-Wechsel zu erlauben.
- Figur 8: den Informationsfluss für den zweiten erfindungsgemäßen Schritt mit einer ISUP-UDI-Fallback-Lösung und mit ISUP-Erweiterungen, wobei das Endgerät UE B des Angerufenen Videotelephonie unterstützt und der Angerufene Videotelephonie wählt,
- Figur 9: den Informationsfluss für den zweiten Schritt einer Signalisierung mit ISUP-Extensions, wobei die Transit Exchange einen ISUP UDI Fallback auslöst und deswegen Sprachtelephonie ausgewählt wird
- Figur 11: einen Servicewechsel, beispielsweise von Sprachtelephonie zu Videotelephonie,
- Figur 12: einen Netzwerk-initialisierten Servicewechsel von einer Videotelephonie zu Sprachtelephonie bei einem Abfallen der Qualität der Radioverbindung.

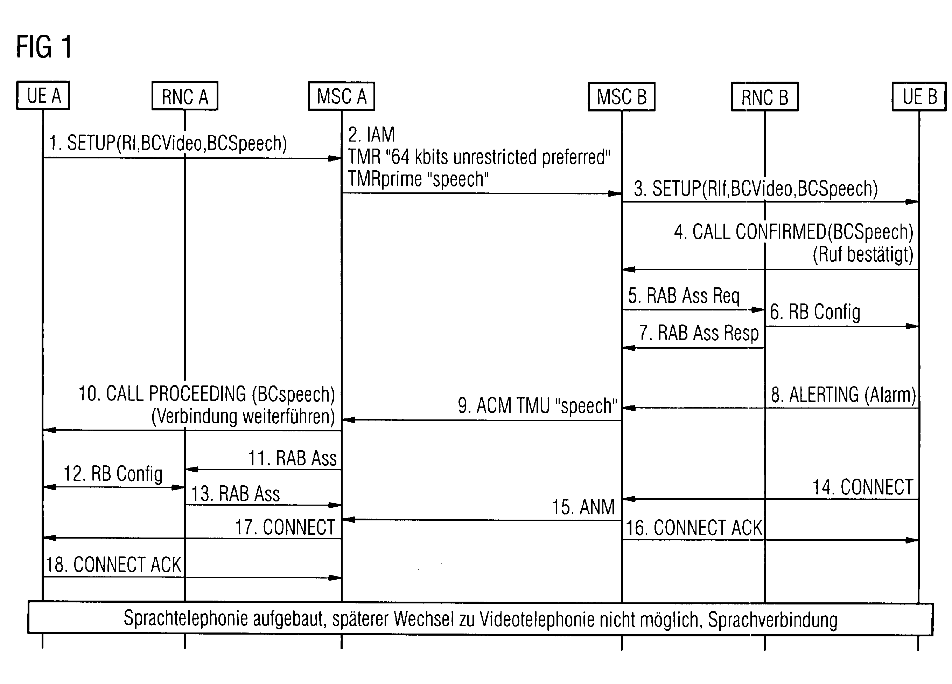

Figuren 1 bis 3 zeigen die Verwendung der ISUP UDI Fallback Signalisierung ohne eine ISUP Signalisierungserweiterung als ersten Schritt einer Einführung con SCUDIF in ISUP Netzen..

Die Signalisierungs-Schritte in Figur 1 sind:
1. Eine Mobilstation (User Equipment UE-A) beginnt den Verbindungsaufbau mit einer SETUP Nachricht und verwendet die von SCUDIF her bekannten Parameter, um anzugeben, dass eine Videotelephonie der bevorzugte Service und Sprachtelephonie der weniger gewünschte Service wäre.
2. Eine anrufer-seitige Vermittlungseinrichtung MSC-A sendet eine ISUP IAM Nachricht unter Verwendung der ISUP-UDI-Fallback-Signalisierung (siehe ITU-T Q.764, Annex D: TMR "64 KBit unrestricted preferred", TMR Prime "Speech") an die angerufenen-seitige Vermittlungseinrichtung MSC-B..
3. Die angerufenen-seitige Vermittlungseinrichtung MSC-B sendet eine Set-Up (Verbindungsaufbau)-Nachricht an die angerufenenseitige Mobilstation UE-B, wobei Videotelephonie als bevorzugter Service angegeben wird und wobei Sprachtelephonie als weniger bevorzugter Service angegeben wird. Ein neuer Wert "Repeat Indicator Fallback" (RIF) des Parameters "repeat indicator" gibt an, dass der Angerufene oder sein das UE (Mobilstation) beim Verbindungsaufbau zwischen Sprachtelephonie und Videotelephonie auswählen kann, aber nicht den Servicewechsel während einer bestehenden Verbindung verwenden soll.
4. Die Mobilstation UE entscheidet sich für eine Sprachtelephonie, weil sie eine Videotelephonie nicht unterstützen kann. Sie antwortet mit einer Call Confirmed-Nachricht, die angibt, dass das UE Sprachtelephonie wünscht...
5. - 7. Die Vermittlungseinrichtung MSC-B baut eine geeignete Radionetzverbindung (Radio Access Barrer) auf. Die Funknetzsteuerung RNC-B baut eine geeignete Funkverbindung auf.
8. Die Mobilstation beginnt zu klingeln und sendet die Nachricht "alerting" (Alarm).
9. Die Vermittlungseinrichtung MSC-B sendet eine ACM-Nachricht unter Verwendung einer ISUP-UDI-Fallback-Signalisierung, um anzuzeigen, dass eine Sprachverbindung ausgewählt wurde (Parameter "TMU speech").
10. Die Vermittlungseinrichtung MSC-A sendet eine "Call-Proceeding"-Nachricht an die Mobilstation UE-A. Darin drückt sie aus, dass Sprachtelephonie ausgewählt wurde und nur Sprachtelephonie unterstützt ist..
11.- 13. Die Vermittlungseinrichtung MSC-A baut eine geeignete Radionetzverbindung auf. Die Funknetzsteuerung RNC-A baut eine geeignete Funkverbindung auf.
14. - 18. Der angerufene Nutzer B nimmt die Verbindung an. Dies wird signalisiert durch "Connect"- und "ANM"-Nachrichten, die an sich bekannt sind.

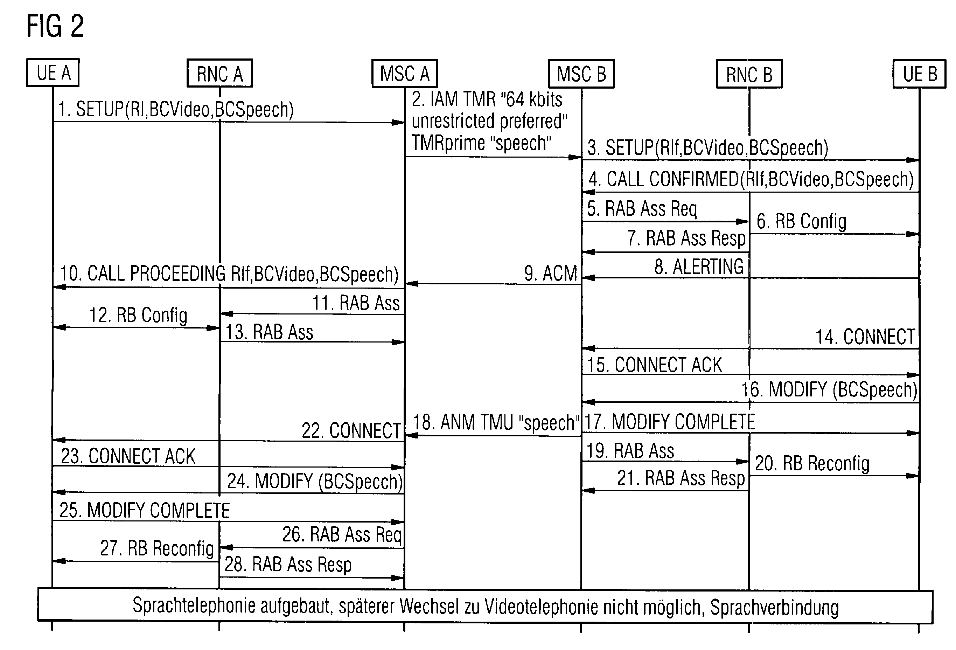

Figur 2 zeigt folgenden Ablauf:
1. bis 3. wie Figur 1.
4. Die Mobilstation UE-B unterstützt Videotelephonie und wählt den Videotelephonie-Service als Voreinstellung. Sie antwortet mit einer "Call Confirmed"-Nachricht (Anruf bestätigt), die angibt, dass Videotelephonie unterstützt und gewünscht ist.
5. bis 7. Die Vermittlungseinrichtung MSC-B baut eine geeignete Radionetzverbindung auf. Eine Funknetzsteuerung RNC-B baut eine geeignete Funkverbindung auf.
8. Die Mobilstation UE-B beginnt zu klingeln und sendet eine "alerting"-Nachricht (Alarmierung).
9. Die Vermittlungseinrichtung MSC-B sendet eine ACM-Nachricht, ohne ISUP-UDI-Fallback- (ohne TMU "Speech").
10. Die Vermittlungseinrichtung MSC-A sendet eine "Call-Proceeding"-Nachricht an eine Mobilstation UE-A, die anzeigt, dass Videotelephonie zunächst ausgewählt wird, aber eine Wechsel zu Sprachtelephonie während des Verbindungsaufbaus trotzdem noch auftreten kann. Der neue Wert "Repeat Indicator Fallback" (RIF) des Parameters "repeat indicator" zeigt an, dass nur der beim Verbindungsaufbau ein Wechsel auftreten kann, aber dass die Mobilstation UE nicht den Servicewechsel während der bestehenden Verbindung verwenden kann..
11. - 13. Die Vermittlungseinrichtung MSC-A baut eine geeignete Radionetzverbindung auf. Eine Funknetzwerksteuerung RNC-A baut eine geeignete Funkverbindung auf.
14. Der angerufene Nutzer beantwortet den Anruf und wählt dabei Sprachtelephonie aus. Die Mobilstation UE-B sendet "Connect" an die Vermittlungseinrichtung MSC-B.
15. Die Vermittlungseinrichtung MSC-B sendet eine Connect ACK-Nachricht an die Mobilstation UE-B und wartet eine kurze Zeit, bevor sie eine ANM-Nachricht sendet.
16. Die Mobilstation UE-B sendet eine "Modify" ("BC-speech")-Nachricht an eine Vermittlungseinrichtung MSC-B.
17. Die Vermittlungseinrichtung MSC-B sendet eine "Modify Complete"-Nachricht (Änderung-abgeschlossen- Nachricht) an eine Mobilstation UE-B.
18. Die Vermittlungseinrichtung MSC-B sendet eine ANM-Nachricht unter Verwendung einer ISUP-UDI-Fallback-Signalisierung (TMU "speech"), um eine Sprachverbindung als Fallback-Lösung zu signalisieren.
19. -21. Die Vermittlungseinrichtung MSC-B rekonfiguriert die Radionetzverbindung für Sprachtelephonie, die Funknetzwerksteuerung RNC-B rekonfiguriert, die Funkverbindung.
22. Die Vermittlungseinrichtung MSC-A sendet eine "Connect"-Nachricht an eine Mobilstation UE-A.
23. Die Mobilstation UE-A antwortet mit einer Connect-ACK-Nachricht.
24. Die Vermittlungseinrichtung MSC-A sendet eine "Modify"-("BC speech")-Nachricht an die Mobilstation MSC-A, um auf Sprachtelephonie umzuschalten.
25. Die Mobilstation A antwortet mit einer "Modify-Complete"-Nachricht.
26. - 28. Eine Mobilstation MSC-B rekonfiguriert die Radionetzverbindung für Sprachtelephonie. Die Funknetzsteuerung RNC-B rekonfiguriert die Funkverbindung.

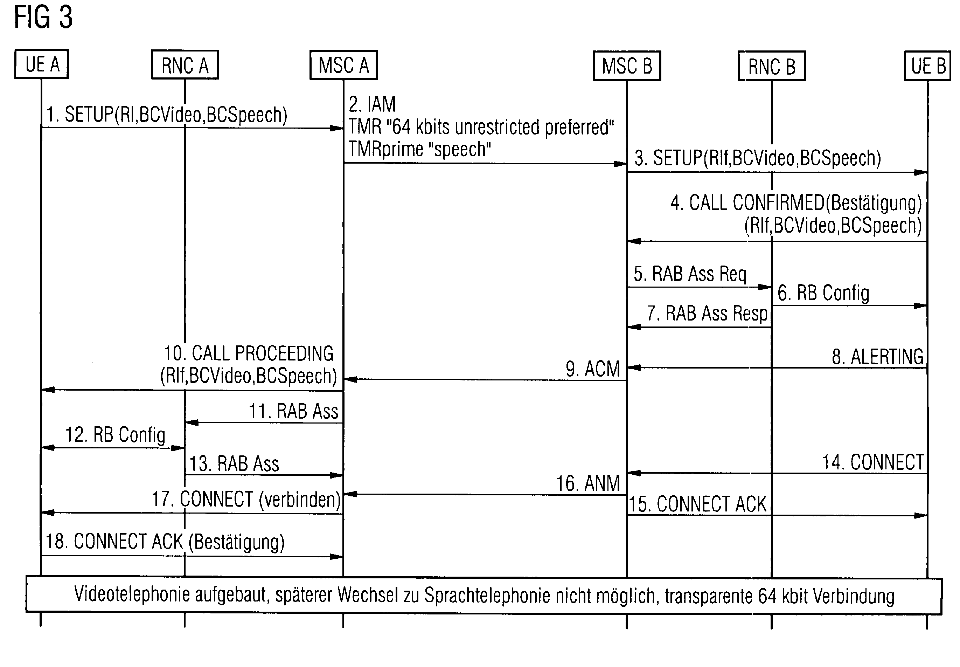

Der Signalisierungsverlauf in Figur 3 ist wie folgt:
1. bis 13. Wie Figur 2
14. Der angerufene Nutzer beantwortet den Anruf und wählt dabei Videotelephonie aus. Die Mobilstation UE-B sendet "Connect" an die Vermittlungseinrichtung MSC-B.
15. Die Vermittlungseinrichtung MSC-B sendet eine Connect ACK-Nachricht an die Mobilstation UE-B und wartet eine kurze Zeit, bevor sie eine ANM-Nachricht sendet.
16. Die Vermittlungseinrichtung MSC-B sendet sie eine ANM-Nachricht sendet, wobei sie den ISUP UDI Fallback nicht verwendet (kein Parameter TMU).
17. Die Vermittlungseinrichtung MSC-A sendet eine "Connect"-Nachricht (Verbinden) an die Mobilstation UE-A.
18 Die Mobilstation UE-A antwortet mit einer "Connect-ACK"-Nachricht (Verbindung bestätigt).

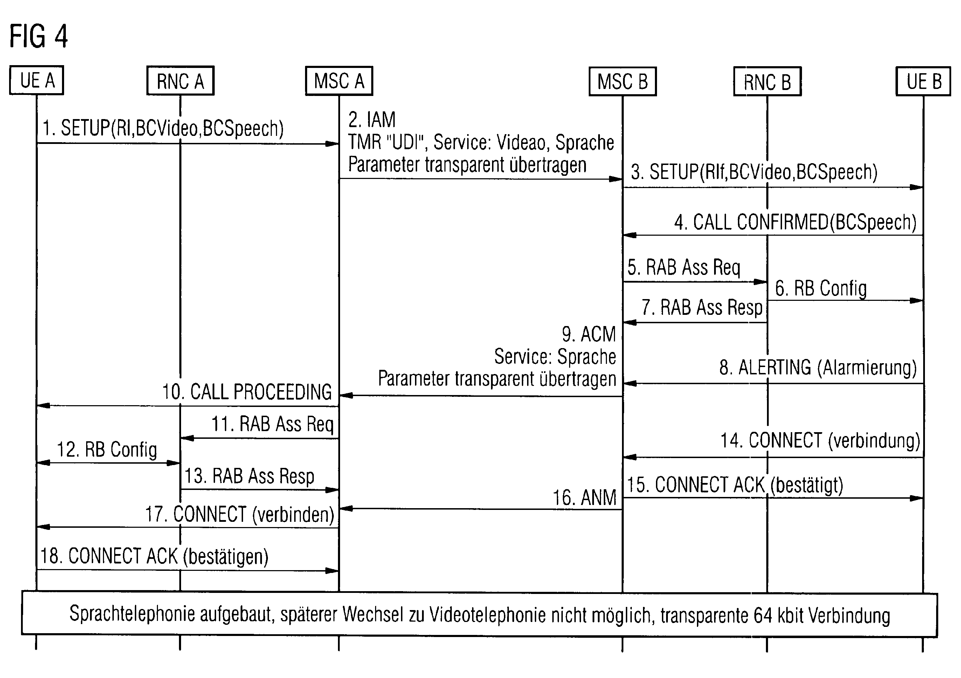

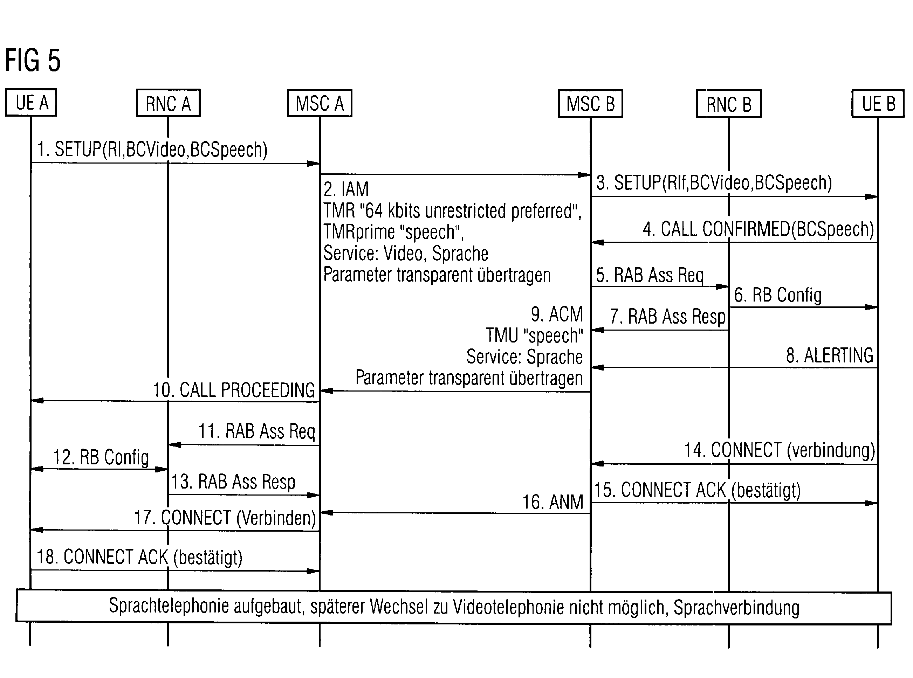

Der Signalisierungsverlauf in Figur 4 zeigt die beispielhaft die Verwendung der ISUP Signalisierungserweiterung ohne ISUP UDI Fallback Signalisierung. In diesem Beispiel unterstützt die Mobilstation des Anrufers nicht die Videotelephonie und wählt entsprechend Sprachtelephonie. Dieses Verhalten wird auch in den Figur 1 (nur mit UDI Fallback Signalisierung) und Figur 5 (UDI Fallback Signalisierung in Kombination mit ISUP Signalisierungserweiterung) dargestellt. Allerdings hat Figur 4 gegenüber Figur 1 und Figur 5 den Nachteil, dass eine teurere transparenter Datenverbindung aufgebaut wird.

Der Signalisierungsverlauf in Figur 4 ist wie folgt:
1. Eine Mobilstation (User Equipment UE-A) beginnt den Verbindungsaufbau mit einer SETUP Nachricht und verwendet die von SCUDIF her bekannten Parameter, um anzugeben, dass eine Videotelephonie der bevorzugte Service und Sprachtelephonie der weniger gewünschte Service ist.
2. Eine anrufer-seitige Vermittlungseinrichtung MSC-A sendet eine ISUP IAM Nachricht unter Verwendung geeigneter Parameter einer ISUP Signalisierungserweiterung (Zum Beispiel "Service: Video, Sprache") an die angerufenen-seitige Vermittlungseinrichtung MSC-B. Darin drückt die Vermittlungseinrichtung MSC-A aus, dass Videotelephonie der bevorzugte Service des Anrufers und Sprachtelephonie der weniger gewünschte Service ist. Die Vermittlungseinrichtung MSC-A gibt mit Hilfe des ISUP Vorwärts-Kompatibilitäts-Mechanismuses auch an, auch an, dass die Parameter der Signalisierungserweiterung von möglichen Transit-Vermittlungseinrichtungen (nicht dargestellt), die die Parameter nicht verstehen, transparenten weitergereicht werden sollen. MSC-A verlangt den Aufbau einer transparenten Datenverbindung (TMR "UDI).
3. Die angerufenen-seitige Vermittlungseinrichtung MSC-B überprüft sendet eine Set-Up (Verbindungsaufbau)-Nachricht an die angerufenenseitige Mobilstation UE-B, wobei eine Videotelephonieals bevorzugter Service angegeben wird und wobei Sprachtelephonie als weniger bevorzugter Service angegeben wird. Wie von SCUDIF her bekannt, drückt der Parameter "repeat indicator" aus, dass der Angerufene oder sein das UE (Mobilstation) beim Verbindungsaufbau zwischen Sprachtelephonie und Videotelephonie auswählen kann, und auch den Servicewechsel während einer bestehenden Verbindung verwenden kann.
4. Die Mobilstation UE entscheidet sich für eine Sprachtelephonie, weil sie eine Videotelephonie nicht unterstützen kann. Sie antwortet mit einer Call Confirmed-Nachricht, die angibt, dass das UE Sprachtelephonie wünscht.
5. - 7. Die Vermittlungseinrichtung MSC-B baut eine geeignete Radionetzverbindung (Radio Access Barrer) auf. Die Funknetzsteuerung RNC-B baut eine geeignete Funkverbindung auf.
8. Eine Mobilstation beginnt zu klingeln und sendet die Nachricht "alerting" (Alarm).
9. Eine Vermittlungseinrichtung MSC-B sendet eine ACM-Nachricht unter Verwendung geeigneter Parameter einer ISUP Signalisierungserweiterung (Zum Beispiel "Service: Sprache") an die anrufer-seitige Vermittlungseinrichtung MSC-A. Darin drückt die Vermittlungseinrichtung MSC-B aus, dass nur Sprachtelephonie unterstützt und auch ausgewählt ist. Die Vermittlungseinrichtung MSC-B gibt mit Hilfe des ISUP Vorwärts-Kompatibilitäts-Mechanismuses auch an, auch an, dass die Parameter der Signalisierungserweiterung von möglichen Transit-Vermittlungseinrichtungen (nicht dargestellt), die die Parameter nicht verstehen, transparenten weitergereicht werden sollen.
10. Die Vermittlungseinrichtung MSC-A sendet eine "Call-Proceeding"-Nachricht an die Mobilstation. Darin drückt sie aus, dass Sprachtelephonie ausgewählt wurde.
11.- 13. Die Vermittlungseinrichtung MSC-A baut eine geeignete Radionetzverbindung auf. Die Funknetzsteuerung RNC-A baut eine geeignete Funkverbindung auf.
14. - 18. Der angerufene Nutzer B nimmt die Verbindung an. Dies wird signalisiert durch "Connect"- und "ANM"-Nachrichten, die an sich bekannt sind.

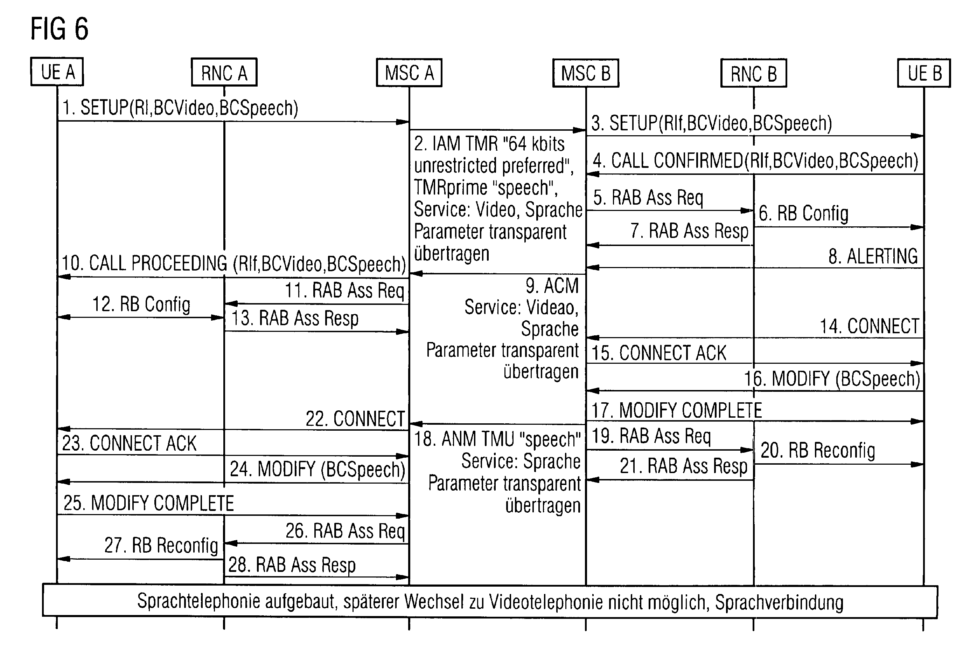

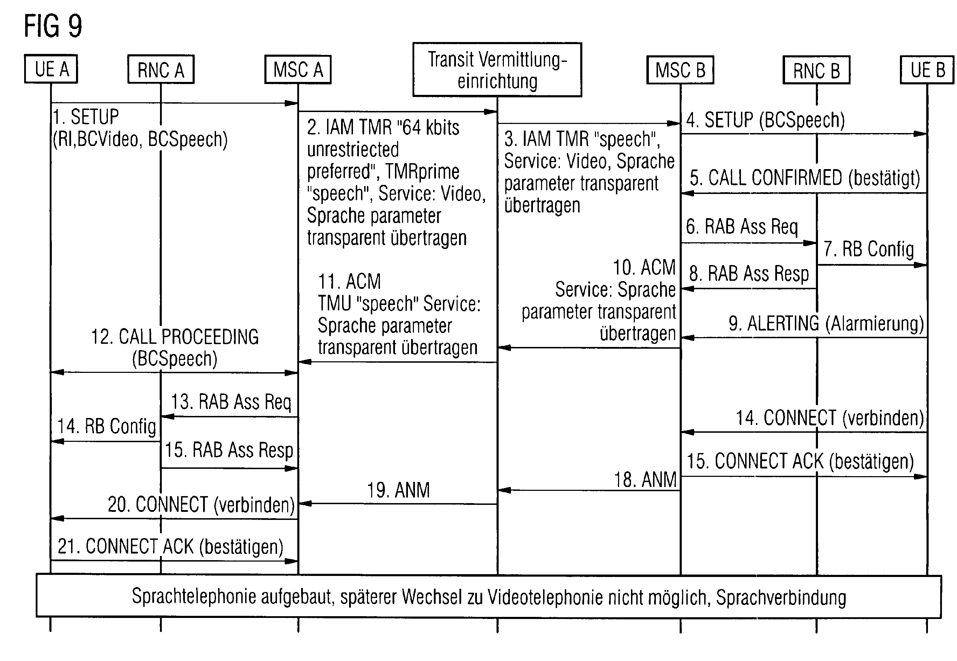

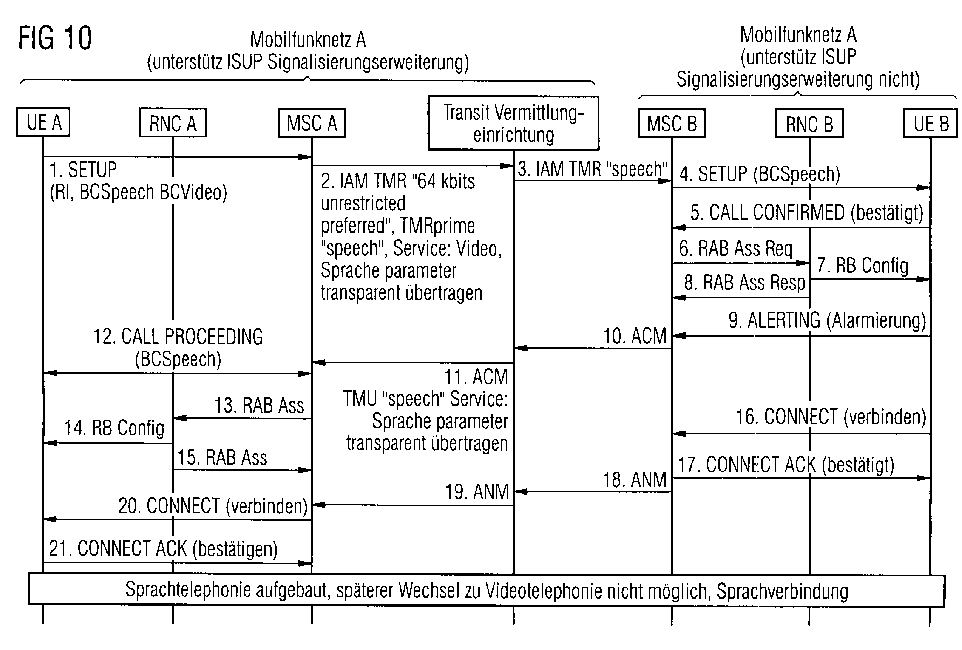

Der Signalisierungsverlauf in den Figuren 5 bis 10 zeigt das erfindungsgemäße Zusammenspiel der ISUP-UDI-Fallback Signalisierung mit der ISUP Signalisierungserweiterung. Dadurch wird einerseits eine Rückwärts-Kompatibilität zu einer Lösung allein mit UDI Fallback (Figur 1 bis 3) ermöglicht, und anderseits ist das beschriebene Verhalten auch mit der Verwendung der ISUP Signalisierungserweiterung ohne UDI Fallback (Figur 4) kompatibel. Zusätzlich ist es damit möglich, die ISUP Signalisierungserweiterung bereits zu verwenden, wenn sie erst in Teilen des Netzes unterstützt wird. Besonders vorteilhaft ist auch der Aufbau einer Sprachverbindung an Stelle der transparenten Datenverbindung für den häufigen Fall, dass das Endgerät des Angerufenen keine Videotelephonie unterstützt (Figur 5), oder dass der Angerufene Sprachtelephonie auswählt und der Netzbetreiber für diesen Fall ein Sprachverbindung ohne der Möglichkeit eines späteren Servicewechsels wünscht (Figur 6), oder dass ein Netzübergangsknoten eine Rückfall auf Sprachtelephonie veranlasst (Figur 10). Auch wird es vermieden, den Verbindungsaufbau abzubrechen, wenn der Aufbau einer transparenten Datenverbindung in Teilen des Netzes nicht möglich ist (Figur 9)..

Der Signalisierungsverlauf in Figur 5 entspricht Figur 4 mit folgenden Ausnahmen:
2. Die anrufer-seitige Vermittlungseinrichtung MSC-A sendet eine ISUP IAM Nachricht Nachricht unter Verwendung der ISUP-UDI-Fallback-Signalisierung (siehe ITU-T Q.764, Annex D: TMR "64 KBit unrestricted preferred", TMR Prime "Speech") sowie unter Verwendung geeigneter Parameter einer ISUP Signalisierungserweiterung (Zum Beispiel "Service: Video, Sprache") an die angerufenen-seitige Vermittlungseinrichtung MSC-B. Die Parameter der Signalsisierungserweiterung werden wie in Figur 4 beschrieben verwendet.
9. Eine Vermittlungseinrichtung MSC-B sendet eine ACM-Nachricht unter Verwendung einer ISUP-UDI-Fallback-Signalisierung, um anzuzeigen, dass eine Sprachverbindung ausgewählt wurde (Parameter "TMU speech") sowie unter Verwendung geeigneter Parameter einer ISUP Signalisierungserweiterung (Zum Beispiel "Service: Sprache") an die anrufer-seitige Vermittlungseinrichtung MSC-A. Darin drückt die Vermittlungseinrichtung MSC-B aus, dass nur Sprachtelephonie als Service unterstützt und auch ausgewählt ist. Die Parameter der Signalsisierungserweiterung werden wie in Figur 4 beschrieben verwendet.

Der Signalisierungsverlauf in Figur 6 ist wie folgt:
1. bis 3. wie Figur 5.
4. Die Mobilstation UE-B unterstützt Videotelephonie und wählt den Videotelephonie-Service als Voreinstellung. Sie antwortet mit einer "Call Confirmed"-Nachricht (Anruf bestätigt), die angibt, dass Videotelephonie unterstützt und gewünscht ist.
5. - 7. Die Vermittlungseinrichtung MSC-B baut eine geeignete Radionetzverbindung (Radio Access Barrer) auf. Die Funknetzsteuerung RNC-B baut eine geeignete Funkverbindung auf.
8. Die Mobilstation UE-B beginnt zu klingeln und sendet eine "alerting"-Nachricht (Alarmierung).
9. Die Vermittlungseinrichtung MSC-B sendet eine ACM-Nachricht, ohne ISUP-UDI-Fallback- (ohne TMU "Speech"). Sie verwendet darin Parameter der ISUP Signalisierungserweiterung (Zum Beispiel "Service: Video,Sprache") und drückt damit aus, dass Videotelephonie und Sprachtelephonie unterstützt sind und zunächst Videotelephonie ausgewählt ist. Die Vermittlungseinrichtung MSC-B gibt mit Hilfe des ISUP Vorwärts-Kompatibilitäts-Mechanismuses auch an, dass die Parameter der Signalisierungserweiterung von möglichen Transit-Vermittlungseinrichtungen (nicht dargestellt), die die Parameter nicht verstehen, transparenten weitergereicht werden sollen.
10. bis 17. wie Figur 2.
18. Es ist die Politik des Netzbetreibers, eine Sprachverbindung ohne die Möglichkeit eines späteren Servicewechsels auszuwählen, wenn der angerufene Benutzer Sprachtelephonie auswählt, aber sein Endgerät auch Videotelephonie unterstützt. Die Vermittlungseinrichtung MSC-B sendet entsprechend eine ANM-Nachricht unter Verwendung einer ISUP-UDI-Fallback-Signalisierung (TMU "speech"), um eine Sprachverbindung als Fallback-Lösung zu signalisieren. Die Vermittlungseinrichtung MSC-B verwendet zusätzlich geeigneter Parameter einer ISUP Signalisierungserweiterung (Zum Beispiel "Service: Sprache") um auszudrücken, dass nur Sprachtelephonie unterstützt und auch ausgewählt ist. Die Vermittlungseinrichtung MSC-B gibt mit Hilfe des ISUP Vorwärts-Kompatibilitäts-Mechanismuses auch an, auch an, dass die Parameter der Signalisierungserweiterung von möglichen Transit-Vermittlungseinrichtungen (nicht dargestellt), die die Parameter nicht verstehen, transparenten weitergereicht werden sollen.
19. bis 28. wie Figur 2.

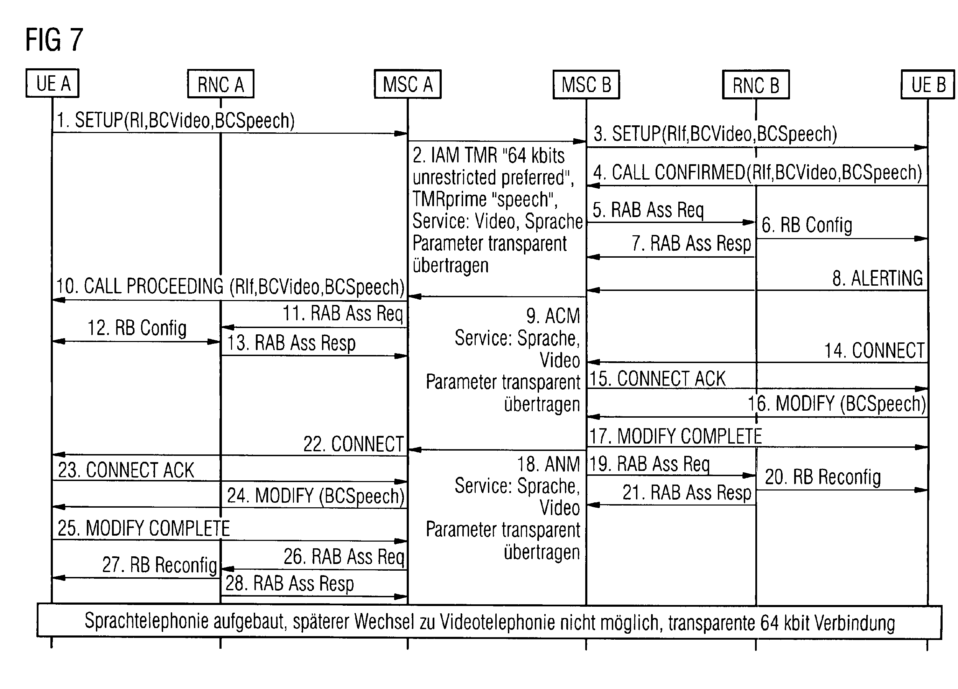

Der Signalisierungsverlauf in Figur 7 entspricht Figur 6 mit folgender Ausnahme:
18. Es ist die Politik des Netzbetreibers, eine transparente Datenverbindung mit der Möglichkeit eines späteren Servicewechsels auszuwählen, wenn der angerufene Benutzer Sprachtelephonie auswählt, aber sein Endgerät auch Videotelephonie unterstützt. Die Vermittlungseinrichtung MSC-B sendet entsprechend eine ANM-Nachricht ohne ISUP-UDI-Fallback-Signalisierung (TMU "speech"). Die Vermittlungseinrichtung MSC-B verwendet geeigneter Parameter der ISUP Signalisierungserweiterung (Zum Beispiel "Service: Sprache, Video") um auszudrücken, dass Sprachtelephonie und Videotelephonie unterstützt sind und Sprachtelephonie ausgewählt ist. Die Vermittlungseinrichtung MSC-B gibt mit Hilfe des ISUP Vorwärts-Kompatibilitäts-Mechanismuses auch an, dass die Parameter der Signalisierungserweiterung von möglichen Transit-Vermittlungseinrichtungen (nicht dargestellt), die die Parameter nicht verstehen, transparenten weitergereicht werden sollen.

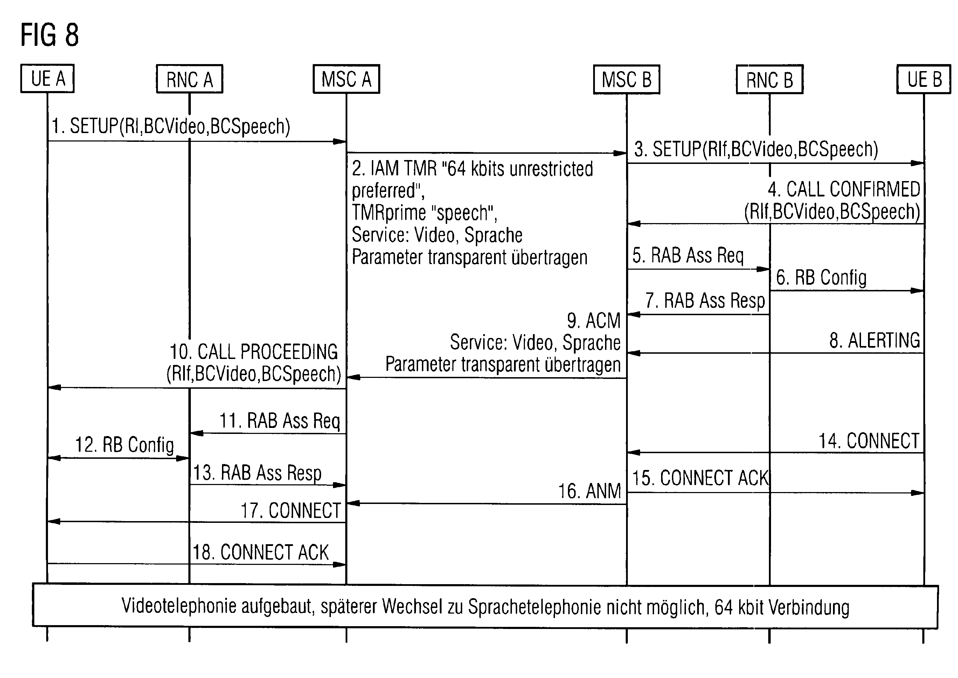

Der Signalisierungsverlauf in Figur 8 ist wie folgt:
1. bis 13. wie Figur 6.
14. Der angerufene Nutzer beantwortet den Anruf und wählt dabei Videotelephonie aus. Die Mobilstation UE-B sendet "Connect" an die Vermittlungseinrichtung MSC-B.
15. Die Vermittlungseinrichtung MSC-B sendet eine Connect ACK-Nachricht an die Mobilstation UE-B und wartet eine kurze Zeit, bevor sie eine ANM-Nachricht sendet.
16. Die Vermittlungseinrichtung MSC-B sendet eine ANM-Nachricht, wobei sie den ISUP UDI Fallback nicht verwendet (kein Parameter TMU). Die Vermittlungseinrichtung MSC-B verwendet geeigneter Parameter der ISUP Signalisierungserweiterung (Zum Beispiel "Service: Sprache, Video") um auszudrücken, dass Sprachtelephonie und Videotelephonie unterstützt sind und Videotelephonie ausgewählt ist. Die Vermittlungseinrichtung MSC-B gibt mit Hilfe des ISUP Vorwärts-Kompatibilitäts-Mechanismuses auch an, dass die Parameter der Signalisierungserweiterung von möglichen Transit-Vermittlungseinrichtungen (nicht dargestellt), die die Parameter nicht verstehen, transparent weitergereicht werden sollen.
17. Die Vermittlungseinrichtung MSC-A sendet eine "Connect"-Nachricht (Verbinden) an die Mobilstation UE-A.
18 Die Mobilstation UE-A antwortet mit einer "Connect-ACK"-Nachricht (Verbindung bestätigt).

Figur 9 stellt den Fall dar, dass eine Transitvermittlungseinrichtung den ISUP UDI Fallbackmechanismus benutzt, weil im nächsten Verbindungsabschnitt keine transparente Datenverbindung verfügbar ist. Der Signalisierungsverlauf ist wie folgt:
1. bis 2. wie Figur 6.
3. Die Transitvermittlungseinrichtung findet für den nächsten Verbindungsabschnitt keine transparente Datenverbindung und führt daher den bekannten ISUP UDI Fallback durch. Sie reicht die ISUP IAM Nachricht Nachricht mit Parameter TMR "Speech") sowie den unveränderten Parameter der ISUP Signalisierungserweiterung weiter. Dieses Verhalten ist gemäß ISUP- Vorwärts-Kompatibilitäts-Mechanismuses gefordert, da die Transitvermittlungseinrichtung die Parameter der Signalisierungserweiterung nicht versteht.
4. Die Vermittlungseinrichtung MSC-B erkennt an der geforderten Sprachverbindung (TMR "speech") erfindungsgemäß, das nur Sprachtelephonie möglich ist, obwohl die ISUP Signalisierungserweiterung andere Informationen enthält und sendet entsprechend eine SETUP Nachricht für Sprachtelephonie an die Mobilstation des Angerufenen UE-B.
5. bis 9. wie für Sprachtelephonie bekannt schreitet der Aufbau der Radionetzverbindung auf Seiten des Angerufenen voran.
10. Die Vermittlungseinrichtung MSC-B sendet eine ACM Nachricht unter Verwendung geeigneter Parameter einer ISUP Signalisierungserweiterung (Zum Beispiel "Service: Sprache"). Darin drückt die Vermittlungseinrichtung MSC-B aus, dass nur Sprachtelephonie als Service unterstützt und auch ausgewählt ist. Mit Hilfe des ISUP Vorwärts-Kompatibilitäts-Mechanismuses gibt MSC-B auch an, dass die Parameter der Signalisierungserweiterung von möglichen Transit-Vermittlungseinrichtungen, die die Parameter nicht verstehen, transparenten weitergereicht werden sollen.
11. Die Transitvermittlungseinrichtung fügt gemäß dem bekannten ISUP UDI Fallback den Parameter TMU "Speech" in die ACM Nachricht ein und reicht den unveränderten Parameter der ISUP Signalisierungserweiterung weiter. Dieses Verhalten ist gemäß ISUP- Vorwärts-Kompatibilitäts-Mechanismuses gefordert, da die Transitvermittlungseinrichtung die Parameter der Signalisierungserweiterung nicht versteht.
11. Die Vermittlungseinrichtung MSC-A sendet eine "Call-Proceeding"-Nachricht an die Mobilstation UE-A. Darin drückt sie aus, dass Sprachtelephonie ausgewählt wurde und nur Sprachtelephonie unterstützt ist.
13. bis 21. wie für Sprachtelephonie bekannt schreitet der Verbindungsaufbau voran.

Figur 10 stellt das Verhalten einer Netzübergangsvermittlungseinrichtung zu einem Netz, dass die ISUP Signalisierungserweiterung nicht unterstützt, dar. Der Fall, das der Anrufer zunächst eine Sprachtelephonie, aber die Möglichkeit eines Wechsels zur Videotelephonie wünscht, ist dargestellt. Der Signalisierungsverlauf ist wie folgt:
1. Eine Mobilstation (User Equipment UE-A) beginnt den Verbindungsaufbau mit einer SETUP Nachricht und verwendet die von SCUDIF her bekannten Parameter, um anzugeben, dass Sprachtelephonie der bevorzugte Service und Videotelephonie der weniger gewünschte Service ist.
2. Die anruferseitige Vermittlungseinrichtung MSC-A sendet eine ISUP IAM Nachricht unter Verwendung der ISUP-UDI-Fallback-Signalisierung (siehe ITU-T Q.764, Annex D: TMR "64 KBit unrestricted preferred", TMR Prime "Speech") sowie unter Verwendung geeigneter Parameter einer ISUP Signalisierungserweiterung (Zum Beispiel "Service: Sprache, Video"). Darin drückt die Vermittlungseinrichtung MSC-A aus, dass Sprachtelephonie der bevorzugte Service des Anrufers und Videotelephonie der weniger gewünschte Service ist. Die Vermittlungseinrichtung MSC-A gibt mit Hilfe des ISUP Vorwärts-Kompatibilitäts-Mechanismuses auch an, auch an, dass die Parameter der Signalisierungserweiterung von möglichen Transit-Vermittlungseinrichtungen (nicht dargestellt), die die Parameter nicht verstehen, transparent weitergereicht werden sollen.
3. Die Netzübergangs-Vermittlungseinrichtung muss die ISUP-Signalisierungserweiterung unterstützen. Da sie weiß, dass im Mobilfunknetz B, in das die Verbindung gelenkt wird, die Signalisierungserweiterung nicht unterstützt wird, führt sie den bekannten ISUP UDI Fallback durch. Sie reicht die ISUP IAM Nachricht Nachricht mit Parameter TMR "Speech") und ohne Parameter der ISUP Signalisierungserweiterung weiter.
3. bis 10. wie für Sprachtelephonie bekannt schreitet der Aufbau der Verbindung auf Seiten des Angerufenen voran.
10. Die Vermittlungseinrichtung MSC-B sendet eine ACM Nachricht unter Verwendung geeigneter Parameter einer ISUP Signalisierungserweiterung (Zum Beispiel "Service: Sprache"). Darin drückt die Vermittlungseinrichtung MSC-B aus, dass nur Sprachtelephonie als Service unterstützt und auch ausgewählt ist. Mit Hilfe des ISUP Vorwärts-Kompatibilitäts-Mechanismuses gibt MSC-B auch an, dass die Parameter der Signalisierungserweiterung von möglichen Transit-Vermittlungseinrichtungen, die die Parameter nicht verstehen, transparent weitergereicht werden sollen.
11. Die Netzübergangs-Vermittlungseinrichtung fügt gemäß dem bekannten ISUP UDI Fallback den Parameter TMU "Speech" in die ACM Nachricht ein. Sie fügt auch geeigneter Parameter einer ISUP Signalisierungserweiterung (Zum Beispiel "Service: Sprache"). Darin drückt die Vermittlungseinrichtung aus, dass nur Sprachtelephonie als Service unterstützt und auch ausgewählt ist.
12. Die Vermittlungseinrichtung MSC-A sendet eine "Call-Proceeding"-Nachricht an die Mobilstation UE-A. Darin drückt sie aus, dass Sprachtelephonie ausgewählt wurde und nur Sprachtelephonie unterstützt ist.
13. bis 21. wie für Sprachtelephonie bekannt schreitet der Verbindungsaufbau voran.

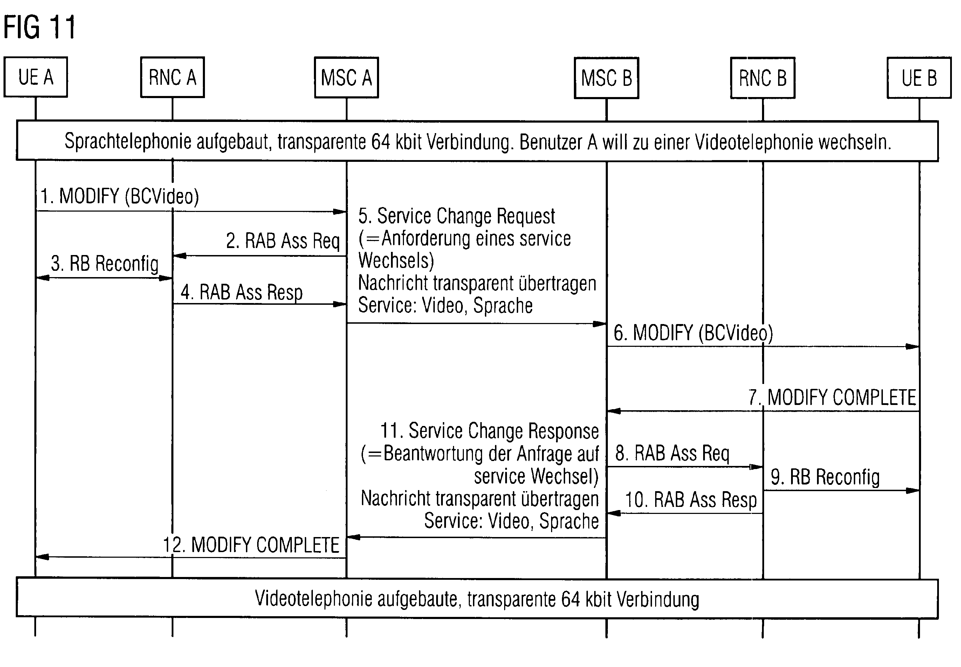

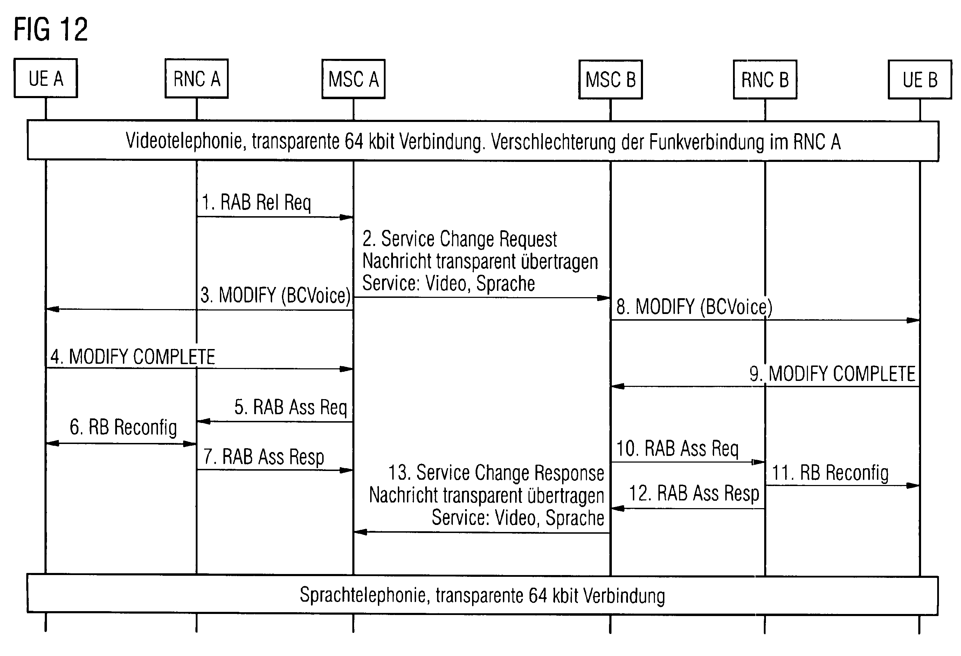

Figur 11 und 12 stellen den Service-Wechsel während einer bestehenden Verbindung dar. Dieser setzt eine transparente Datenverbindung voraus. Beim Verbindungsaufbau haben die Mobilstationen UE-A und UE-B sowie die Vermittlungseinrichtungen MSC-A und MSC-B aus der ISUP Signalisierungserweiterung entnommen, dass ein Wechsel während der Verbindung möglich ist. Der Wechsel wird im ISUP-Netz wahlweise durch neue ISUP-Nachrichten, oder durch APM Nachrichten (nicht dargestellt) signalisiert. Mit Hilfe des ISUP Vorwärts-Kompatibilitäts-Mechanismuses wird angegeben, dass diese Nachrichten von möglichen Transit-Vermittlungseinrichtungen, die die Nachrichten nicht verstehen, transparent weitergereicht werden sollen. In den Nachrichten sind vorzugsweise die Parameter der ISUP-Signalisierungserweiterung enthalten, um ausdrücken, welcher Service gewünscht ist.

Fig. 11 zeigt die Situation, dass Mobilstationen sich in einer Sprachtelephonie befinden und ein Nutzer A zu einer Videotelephonie umschalten möchte.

Figur 12 zeigt den Fall, dass sich die Mobilstationen in einer Videotelephonie befinden und sich die Funkversorgung beim RNC-A verschlechtert, so dass MSC-A eine Umschalten auf Sprachtelephonie veranlasst.

Die in den Signalisierungsschritten in den Figuren 1 bis 12 dargestellten Parameterbezeichnungen sind Eigennamen und keine fremdsprachlichen Ausdrücke.

## Patentansprüche

1. Verfahren zur Signalisierung während eines Verbindungsaufbaus zwischen zwei Teilnehmern (UE-A, UE-B) mindestens eines Mobilfunknetzes (RNC-A, MSC-A,MSC-B, RNC-B),
wobei neben einer "ISUP UDI Fallback"- Signalisierung eine Signalisierungserweiterung verwendet wird, die auch einen Wechsel zwischen einer Sprachtelephonie und einer Videotelephonie während einer bestehenden Verbindung ermöglicht,
wobei das Endgerät des anrufenden Teilnehmers (UE-A) signalisiert, ob es Videotelephonie und/oder Sprachtelephonie unterstützt und ob der Teilnehmer Videotelephonie oder Sprachtelephonie bevorzugt,
wobei eine Vermittlungseinrichtung (MSC-B) das Endgerät des angerufenen Teilnehmers (UE-B) nach einer Rückmeldung dahingehend fragt, ob es Videotelephonie und/oder Sprachtelephonie unterstützt und ob der Teilnehmer Videotelephonie oder Sprachtelephonie bevorzugt,
wobei die Vermittlungseinrichtung (MSC-B) unter Berücksichtigung der Rückmeldung des angerufenen Teilnehmers (UE-B) entscheidet, ob Videotelephonie oder Sprachtelephonie aufgebaut wird.

2. Verfahren nach Anspruch 1, **dadurch gekennzeichnet, dass** die UDI Fallback Signalisierung auch ohne eine Signalisierungserweiterung verwendet werden kann, wenn der Anrufer bevorzugt den Aufbau einer Videotelephonie, aber als zweite Wahl den Aufbau einer Sprachtelephonie wünscht.

3. Verfahren nach einem der vorhergehenden Ansprüche, **dadurch gekennzeichnet, dass**
ein späterer Wechsel zwischen Sprachtelephonie und Videotelephonie nur dann möglich ist, wenn eine Verbindungsaufbau Anrufer-(UE-A)-seitige Vermittlungseinrichtung (MSC-A) und eine Angerufenen-(UE-B)-seitige Vermittlungseinrichtung (MSC-B) mittels einer "UDI Fallback Signalisierung" eine transparente Datenverbindung vereinbart haben, wobei sowohl Sprachtelephonie wie auch Videotelephonie über die transparente Datenverbindung geführt werden können.

4. Verfahren nach einem der vorhergehenden Ansprüche, **dadurch gekennzeichnet, dass**
die Anrufer-(UE-A)-seitige Vermittlungseinrichtung (MSC-A) beim Verbindungsaufbau der Angerufenen-(UE-B)-seitigen Vermittlungseinrichtung (MSC-B) mittels der Signalisierungserweiterung angibt, ob das Endgerät des anrufenden Teilnehmers (UE-A) Videotelephonie unterstützt, ob das Endgerät des anrufenden Teilnehmers (UE-A) eine Sprachtelephonie unterstützt und ob der anrufende Teilnehmer eine Sprachtelephonie oder Videotelephonie bevorzugt, insbesondere dass sie es mit einem oder mehreren Parameter(n) in einer IAM-Nachricht angibt.

5. Verfahren nach einem der vorhergehenden Ansprüche, **dadurch gekennzeichnet, dass** die Anrufer-(UE-A)-seitige Vermittlungseinrichtung (MSC-A), wenn noch nicht alle Vermittlungseinrichtungen im Netz außer reinen Transitvermittlungseinrichtungen die Signalisierungserweiterung unterstützen, beim Verbindungsaufbau der Angerufenen-(UE-B)-seitigen Vermittlungseinrichtung (MSC-B) mit Hilfe von ISUP mitteilt, dass die Angerufenen-(UE-B)-seitige Vermittlungseinrichtung (MSC-B) die Signalisierungserwitterung ignorieren soll, wenn sie die Signalisierungserweiterung nicht unterstützt.

6. Verfahren nach einem der vorhergehenden Ansprüche, **dadurch gekennzeichnet, dass** die Anrufer-(UE-A)-seitige Vermittlungseinrichtung (MSC-A), wenn noch nicht alle Vermittlungseinrichtungen im Netz außer reinen Transitvermittlungseinrichtungen die Signalisierungserweiterung unterstützen, und wenn der Anrufer (UE A) eine Sprachtelephonie wünscht, die Signalisierungserweiterung nicht nützt, und eine Sprachverbindung aufbaut.

7. Verfahren nach einem der vorhergehenden Ansprüche, **dadurch gekennzeichnet, dass** die Information, ob alle Vermittlungseinrichtungen im Netz außer reinen Transitvermittlungseinrichtungen die Signalisierungserweiterung unterstützen, in der die Anrufer-(UE-A)-seitige Vermittlungseinrichtung (MSC-A) abgespeichert ist.

8. Verfahren nach einem der vorhergehenden Ansprüche, **dadurch gekennzeichnet, dass**
die Angerufenen-(UE-B)-seitige Vermittlungseinrichtung (MSC-B) beim Verbindungsaufbau der Anrufer-(UE-A)-seitigen Vermittlungseinrichtung (MSC-A) mittels der Signalisierungserweiterung angibt, ob das Endgerät des angerufen Teilnehmers (UE-B) eine Videotelephonie unterstützt, ob das Endgerät des angerufenen Teilnehmers (UE-B) eine Sprachtelephonie unterstützt, und ob der angerufene Teilnehmer Sprachtelephonie oder Videotelephonie bevorzugt, insbesondere dass sie es mit einem Parameter in einer ANM- und/oder ACM-Nachricht angibt.

9. Verfahren nach einem der vorhergehenden Ansprüche, **dadurch gekennzeichnet, dass**
die Angerufenen-(UE-B)-seitige Vermittlungseinrichtung (MSC-B) beim Erhalt der IAM Nachricht, die gemäß ISUP eine Sprachverbindung fordert, unabhängig von Informationen in der Signalisierungserweiterung Sprachtelephonie auswählt.

10. Verfahren nach einem der vorhergehenden Ansprüche, **dadurch gekennzeichnet, dass**
die Angerufenen-(UE-B)-seitige Vermittlungseinrichtung (MSC-B) die UDI Fallback Prozedur verwendet, um eine Sprachverbindung aufzubauen, wenn das Endgerät des Angerufenen nur Sprachtelephonie unterstützt.

11. Verfahren nach einem der vorhergehenden Ansprüche, **dadurch gekennzeichnet, dass**
die Angerufenen-(UE-B)-seitige Vermittlungseinrichtung (MSC-B) beim Erhalt der IAM Nachricht, die gemäß ISUP UDI Fallback eine transparente Datenverbindung fordert aber die Signalisierungserweiterung nicht enthält, dem Endgerät des angerufenen Teilnehmers (UE-B) mitteilt, dass nur eine einmalige Wahl zwischen Sprachtelephonie und Videotelephonie während des Verbindungsaufbaus, aber kein späterer Wechsel möglich ist.

12. Verfahren nach einem der vorhergehenden Ansprüche, **dadurch gekennzeichnet, dass**
die Angerufenen-(UE-B)-seitige Vermittlungseinrichtung (MSC-B) beim Erhalt der IAM Nachricht, die gemäß ISUP UDI Fallback eine transparente Datenverbindung fordert aber die Signalisierungserweiterung nicht enthält, wenn der angerufenen Teilnehmers (UE-B) Sprachtelephonie auswählt, die UDI Fallback Prozedur zum Aufbau einer Sprachverbindung nützt.

13. Verfahren nach einem der vorhergehenden Ansprüche, **dadurch gekennzeichnet, dass**
die Angerufenen-(UE-B)-seitige Vermittlungseinrichtung (MSC-B) beim Erhalt der IAM Nachricht, die gemäß ISUP UDI Fallback eine transparente Datenverbindung fordert aber die Signalisierungserweiterung nicht enthält, wenn der des angerufenen Teilnehmers (UE-B) Videotelephonie auswählt, die UDI Fallback Prozedur zum Aufbau einer transparenten Datenverbindung nützt.

14. Verfahren nach einem der vorhergehenden Ansprüche,
**dadurch gekennzeichnet, dass** die Anrufer-(UE-A)-seitige Vermittlungseinrichtung (MSC-A) beim Erhalt einer ACM oder ANM Nachricht, die gemäß ISUP UDI Fallback eine Sprachverbindung fordert, unabhängig von Informationen in der möglicherweise enthaltenen Signalisierungserweiterung Sprachtelephonie auswählt.

15. Verfahren nach einem der vorhergehenden Ansprüche,
**dadurch gekennzeichnet, dass** die Anrufer-(UE-A)-seitige Vermittlungseinrichtung (MSC-A) beim Erhalt einer ACM Nachricht, die gemäß ISUP UDI Fallback eine transparente Datenverbindung fordert und die Signalisierungserweiterung nicht enthält, Videotelephonie auswählt.

16. Verfahren nach einem der vorhergehenden Ansprüche,
**dadurch gekennzeichnet, dass** die Anrufer-(UE-A)-seitige Vermittlungseinrichtung (MSC-A) beim Erhalt einer ACM Nachricht, die gemäß ISUP UDI Fallback eine transparente Datenverbindung fordert und die Signalisierungserweiterung nicht enthält, dem Endgerät des Anrufers (UE-A) mitteilt, dass zunächst Videotelephonie ausgewählt wurde und noch ein Wechsel zu Sprachtelephonie während des Verbindungsaufbaus möglich ist, aber kein vom Anrufer ausgelöster Wechsel während der bestehenden Verbindung möglich ist.

17. Verfahren nach einem der Ansprüche 11 oder 16,
**dadurch gekennzeichnet, dass** die Vermittlungseinrichtung (MSC-A bzw. MSC-B) einen neuen Wert des "Repeat indicator" nützt, um dem Endgerät (UE-A bzw. UE-B) anzuzeigen, ob ein Wechsel währen der Verbindung möglich ist.

18. Verfahren nach Anspruch 17,
**dadurch gekennzeichnet, dass** das Endgerät (UE-A bzw. UE-B) dem Nutzer nur dann einen Wechsel zwischen Sprachtelephonie und Videotelephonie während einer bestehenden Verbindung anbietet, wenn der Wechsel möglich ist.

19. Verfahren nach einem der vorhergehenden Ansprüche,
**dadurch gekennzeichnet, dass** ein Übergangsknoten zu einem anderen Netz, das die Signalisierungserweiterung noch nicht vollständig unterstützt, beim Erhalt einer IAM Nachricht, die in der Signalisierungserweiterung anzeigt, dass Sprachtelephonie bevorzugt ist, die Signalisierungserweiterung vor dem Weiterreichen aus der weitergereichten IAM Nachricht entfernt und gemäß UDI Fallback in der weitergereichten IAM Nachricht eine Sprachverbindung auswählt, sowie mittels der "UDI Fallback Signalisierung" in der ACM oder ANM Nachricht der Anrufer-(UE-A)-seitigen Vermittlungseinrichtung (MSC-A) mitteilt, dass ein Sprachverbindung ausgewählt ist.

20. Verfahren nach einem der vorhergehenden Ansprüche,
**dadurch gekennzeichnet, dass** eine Vermittlungseinrichtung beim Übergang zu einem anderen Netz, das die Signalisierungserweiterung noch nicht vollständig unterstützt, beim Erhalt einer IAM Nachricht, die in der Signalisierungserweiterung anzeigt, dass Videotelephonie bevorzugt ist, die Signalisierungserweiterung in der IAM Nachricht weiterreicht.

21. Verfahren nach Anspruch 20,
**dadurch gekennzeichnet, dass** die Information, ob alle Vermittlungseinrichtungen in einem anderen Netz außer reinen Transitvermittlungseinrichtungen die Signalisierungserweiterung unterstützen, in der Vermittlungseinrichtung am Übergang zum anderen Netz abgespeichert ist.

22. Verfahren nach einem der vorhergehenden Ansprüche,
**dadurch gekennzeichnet, dass** während einer bestehenden Verbindung zwischen der Angerufenen(UE-B)-seitigen Vermittlungseinrichtung (MSC-B) und der Anrufer-(UE-A)-seitigen Vermittlungseinrichtung (MSC-A) eine Nachricht übermittelt wird, die angibt, dass ein Teilnehmer (UE-A/UE-B) oder seine Vermittlungseinrichtung (MSC-A/MSC-A) einen Wechsel von der aktuellen Sprachtelephonie oder Videotelephonie zur anderen Art der Telephonie wünscht, und eine weitere Nachricht übermittelt wird, die angibt, ob der andere Teilnehmer (UE-B/ UE-A) dem Wechsel zustimmt, und dass basierend darauf eine Vermittlungseinrichtung (MSC-B) entscheidet, ob ein Wechsel erfolgt.

23. Verfahren nach Anspruch 22, **dadurch gekennzeichnet, dass** die ausgetauschten Nachrichten entweder APM- Nachrichten oder neue ISUP Nachrichten sind.

24. Verfahren nach einem der vorhergehenden Ansprüche, **dadurch gekennzeichnet, dass**
eine Transitvermittlungseinrichtung die Signalisierungserweiterung und APM Nachrichten oder neuen Nachrichten weiterreicht, wenn sie sie nicht versteht.

25. Verfahren nach Anspruch 24, **dadurch gekennzeichnet, dass** die die Nachricht oder Signalisierungserweiterung absendende Vermittlungseinrichtung (MSC-A oder MSC-B) mit Hilfe von ISUP mitteilt, dass Transitvermittlungseinrichtungen die Signalisierungserweiterung oder APM Nachrichten oder neue Nachrichten weiterreichen sollen, wenn sie sie nicht verstehen

26. Verfahren nach einem der vorhergehenden Ansprüche,
**dadurch gekennzeichnet, dass**
die transparente Datenverbindung eine "64kbit unrestricted preferred"-Verbindung oder "UDI"- Verbindung ist.

27. Verfahren nach einem der vorhergehenden Ansprüche,
**dadurch gekennzeichnet, dass**
die Sprachverbindung eine "3.1 kHz audio"-Verbindung oder "speech"- Verbindung ist.

28. Vorrichtung zur Durchführung des Verfahrens nach einem der vorhergehenden Ansprüche.
